# EUROPÄISCHE PATENTANMELDUNG

(11) **EP 3 173 886 A1**
(43) Veröffentlichungstag der Anmeldung: **31.05.2017**
(21) Anmeldenummer: 16161436.7
(22) Anmeldetag: 21.03.2016
(51) Int. Cl.: G05B 19/19, B65G 54/02, B23Q 15/24

(54) **VERFAHREN ZUR STEUERUNG UND/ODER REGELUNG EINES LINEARANTRIEBS, STEUEREINRICHTUNG, LINEARANTRIEB UND ANLAGE**

(30) Priorität: 24.11.2015 EP 15196047; 24.11.2015 EP 15196041; 24.11.2015 EP 15196077
(71) Anmelder: Siemens Aktiengesellschaft, 80333 München (DE)
(72) Erfinder: Jäntsch, Michael, 91052 Erlangen (DE); Klaus, Maximilian, 70839 Gerlingen (DE); Rastätter, Gerhard, 71116 Gärtringen (DE); Sailer, Robin, 72589 Westerheim (DE); Spindler, Carsten, 07368 Remptendorf (DE); Szathmary, Csilla, 70499 Stuttgart (DE)

(57) **Zusammenfassung**

Zusammenfassend betrifft die Erfindung ein Verfahren zur Steuerung und/oder Regelung eines Linearantriebs (LA), einen Linearantrieb (LA) und eine Anlage. Der Linearantrieb (LA) weist zumindest ein Segment (Seg), zumindest einen Läufer (L), zumindest eine Maschinenstation (MS1, MS2) und eine Steuereinrichtung (SE) auf,
- wobei der zumindest eine Läufer (L) mit Hilfe des zumindest einen Segments (Seg) in einer ist, Richtung (x) bewegt wird,
- wobei zumindest ein Teil zumindest eines Segments (Seg) in einem Einflussbereich (EB) der Maschinenstation (MS1, MS2) ist,
- wobei die Bewegung des zumindest einen Läufers (L) durch die Steuereinrichtung (SE) und/oder eine Steuereinheit (U) gesteuert und/oder geregelt wird,
- wobei die Steuerung anhand eines Bewegungsablaufs (BA) für den Läufer (L) erfolgt,
- wobei die Bewegung des jeweiligen Läufers (L) im Einflussbereich (EB) der jeweiligen Maschinenstation (MS1, MS2) von einem Bewegungsprofil (BP) gemäß der Funktionsweise der jeweiligen Maschinenstation (MS1, MS2) vorgegeben wird.

## Beschreibung

Die Erfindung betrifft ein Verfahren zur Steuerung und/oder Regelung eines Linearantriebs, eine Steuereinrichtung und eine Anlage.

Linearantriebe dienen zur Beförderung von Werkstücken und Gütern aller Art, insbesondere von einer Maschinenstation zu einer anderen Maschinenstation. Linearantriebe waren bisher vor allem durch Förderbänder realisiert. Moderne Linearantriebe umfassen Linearmotoren, insbesondere Statoren von Linearmotoren. Linearantriebe umfassen Läufer, wobei die Läufer zum Transport von Gütern oder von Werkstücken dienen.

Bei einer Mehrzahl von Maschinenstationen und Linearmotorstationen, auch als Segmente bezeichnet, ist die Steuerung und/ oder Regelung der Bewegung der Läufer komplex und wird derzeit vorausberechnet. Die Vorausberechnung der Bewegung der Läufer des Linearantriebs ist jedoch nicht flexibel, falls eine Maschinenstation nicht ordnungsgemäß funktioniert.

Daher ergibt sich die Aufgabe, die Bewegung von Läufern eines Linearantriebs flexibel zu gestalten.

Die Aufgabe wird durch ein Verfahren gemäß Anspruch 1 gelöst.

Die Aufgabe wird weiter durch eine Steuereinrichtung gemäß Anspruch 12 gelöst.

Die Aufgabe wird weiter durch einen Linearantrieb mit einer solchen Steuereinrichtung und einer Anlage mit einem solchen Linearantrieb gelöst.

Vorteilhafte Weiterbildungen und Ausführungen der Erfindung sind Gegenstand der abhängigen Ansprüche.

Bei dem Verfahren zur Steuerung und/oder Regelung eines Linearantriebs, weist der Linearantrieb zumindest ein Segment, zumindest einen Läufer, zumindest eine Maschinenstation und eine Steuereinrichtung auf.

Der zumindest eine Läufer wird mit Hilfe des zumindest einen Segments in einer Richtung bewegt,
- wobei zumindest ein Teil zumindest eines Segments in einem Einflussbereich der Maschinenstation ist,
- wobei die Bewegung des zumindest einen Läufers durch die Steuereinrichtung und/oder eine Steuereinheit gesteuert und/oder geregelt wird,
- wobei die Steuerung anhand eines Bewegungsablaufs für den Läufer erfolgt,
- wobei die Bewegung des jeweiligen Läufers im Einflussbereich der jeweiligen Maschinenstation von einem Bewegungsprofil gemäß der Funktionsweise der jeweiligen Maschinenstation vorgegeben wird.

### 1. Funktionsweise des Linearantriebs

Die Segmente des Linearantriebs sind vorzugsweise als Linearmotor-Statoren ausgebildet. Die Segmente weisen aktive Elemente wie Spulen sowie optional Permanentmagnete auf. Die Läufer weisen zumindest ein passives Element, insbesondere ein Permanentmagnet, auf.

Durch das Zusammenwirken der aktiven und der passiven Elemente wird der jeweilige Läufer bewegt. Die aktiven Elemente werden durch die Steuereinrichtung oder durch separate Steuereinheiten mit Strom/Spannung versorgt.

Die Vorgabe der Spannung bzw. des Stromes für die jeweiligen Segmente wird von der Steuereinrichtung vorgegeben. Die Steuereinrichtung gibt die Spannung bzw. den Strom für die Segmente gemäß dem Bewegungsablauf für die Läufer auf den Segmenten vor.

### 2. Bestimmung des Bewegungsablaufs

Der Bewegungsablauf gibt vor, wie die jeweiligen Läufer mit Hilfe der Segmente bewegt werden. Vorzugsweise bewegen sich die Läufer auf den Segmenten. Die Segmente sind nebeneinander angeordnet. Die Segmente bilden eine Strecke, wobei die Läufer entlang der Strecke bewegt werden. Ein Teil der Strecke ist einer Maschinenstation zugeordnet. Dieser Teil der Strecke ist der entsprechenden Maschinenstation zugeordnet. Die Läufer, die sich auf dem Teil der Strecke bewegen, bewegen sich im Einflussbereich der Maschinenstation.

Die Bewegung des jeweiligen Läufers wird durch den Bewegungsablauf bestimmt. Der Bewegungsablauf umfasst beispielhaft eine Ortsfunktion (abhängig von einer Zeit) des jeweiligen Läufers und/oder eine Geschwindigkeitsfunktion (abhängig von einem Ort oder einer Zeit).

Das Bewegungsprofil umfasst für die Bewegung der Läufer im Einflussbereich der jeweiligen Maschinenstation die vorgesehene Bewegung. Die Bewegung der Läufer orientiert sich an der Funktion der Maschinenstation. Ein Bewegungsprofil für die jeweilige Maschinenstation wird vom Benutzer vorgegeben.

Die Läufer bewegen sich im Einflussbereich der Maschinenstation gemäß dem Bewegungsprofil. Vorteilhaft wird das Bewegungsprofil für eine Mehrzahl von Läufern vorgegeben. Das Bewegungsprofil kann durch die Maschinenstation selbst vorgegeben werden. Bevorzugt liegt das Bewegungsprofil für die Steuereinrichtung vor und die Steuereinrichtung steuert und/oder regelt die Bewegung der Läufer im Einflussbereich der Maschinenstation gemäß dem Bewegungsprofil.

Die Läufer bewegen sich außerhalb der Maschinenstation, wie von der Steuereinrichtung vorgegeben. Außerhalb des Einflussbereichs der jeweiligen Maschinenstation wird die Bewegung der Läufer gemäß der zur Verfügung stehenden Läufer und dem aktuellen und in Zukunft auftretenden Bedarf von Läufern von den Maschinenstationen bestimmt.

Durch das vorstehend beschriebene Verfahren kann eine hohe Flexibilität bei der Bewegung der Läufer auf den Segmenten erreicht werden und somit bietet sich ein großes Einsatzspektrum für einen hier beschriebenen Linearantrieb.

In einer vorteilhaften Ausgestaltung des Verfahrens wird das jeweilige Bewegungsprofil von der Steuereinrichtung oder von der entsprechenden Maschinenstation vorgegeben.

Bei der Vorgabe des Bewegungsprofils durch die Maschinenstation übernimmt die Maschinenstation die Befehlshoheit der Bewegung der Läufer, während sich die Läufer im Einflussbereich der jeweiligen Maschinenstation befinden. Vorteilhaft stellt eine Bewegungssteuerung, die der Maschinensteuerung zugeordnet ist, das Bewegungsprofil für die Steuereinrichtung und/ oder die jeweilige Steuereinheit zur Verfügung.

Bevorzugt liegt das jeweilige Bewegungsprofil der Steuereinrichtung vor und das Bewegungsprofil dient zur Bestimmung der Bewegung der Läufer, welche sich im Einflussbereich der jeweiligen Maschinenstation befinden.

Insbesondere durch die letztgenannte Ausgestaltung kann eine weitere Erhöhung der Flexibilität der Bewegung der Läufer erreicht werden.

In einer weiteren vorteilhaften Ausgestaltung des Verfahrens wird eine Mehrzahl von Läufern gemeinsam in den Einflussbereich der jeweiligen Maschinenstation überführt.

In einer Maschinenstation werden meist eine Mehrzahl von Gütern und/oder eine Mehrzahl von Werkstücken, die sich jeweils auf Läufern befinden, in einem Schritt bearbeitet. Für einen reibungslosen Ablauf der Bearbeitung ist es daher vorteilhaft, wenn diese Mehrzahl in einem Schritt in den Einflussbereich der Maschinenstation überführt werden.

So wird die Mehrzahl erst vor dem Einflussbereich der Maschinenstation bereitgestellt bzw. gesammelt. Sobald die Maschinenstation Aufnahmekapazität für eine Mehrzahl von Läufern aufweist, werden diese Läufer zusammen in den Einflussbereich der Maschinenstation überführt.

Durch die gemeinsame Überführung einer Mehrzahl von Läufern kann vorteilhaft eine gleichzeitige Bearbeitung einer Mehrzahl von Werkstücken bzw. Bearbeitungsgütern sichergestellt werden.

In einer weiteren vorteilhaften Ausgestaltung des Verfahrens wird die Bewegung der Läufer durch die Steuereinrichtung vorgegeben.

Insbesondere werden der Bewegungsablauf und/oder das Bewegungsprofil durch die Steuereinheit vorgegeben. Die Bewegung der Läufer anhand des Bewegungsprofils innerhalb des Einflussbereichs der Maschinenstation sowie der Bewegungsablauf der Läufer außerhalb des Bewegungsprofils erfolgt gemäß der vorstehenden Ausgestaltung des Verfahrens durch die Steuereinrichtung. Die Steuereinrichtung dient zur Steuerung und/ oder Regelung der Bewegung der Läufer des Linearantriebs und optional zur Steuerung und/oder Regelung der jeweiligen Maschinenstation, insbesondere der Antriebe der jeweiligen Maschinenstation.

In einer weiteren vorteilhaften Ausgestaltung des Verfahrens wird die Bewegung des jeweiligen Läufers während des Betriebs des Linearantriebs ermittelt.

Die Steuervorrichtung ermittelt nach den vorliegenden Bedingungen, wie z.B.
- Positionen der jeweiligen Läufer,
- Zustand der jeweiligen Maschinenstation,
- Anzahl der für eine bestimmte Maschinenstation bereitstehenden Anzahl von Läufern,
- momentane Aufnahmekapazität von Läufern der jeweiligen Maschinenstation.

Gemäß den vorliegenden Bedingungen wird im online-Betrieb (alternativ auch als on-the-fly-Ermittlung bezeichnet) der Bewegungsablauf ermittelt. Der Bewegungsablauf wird fortwährend neu ermittelt. Der Bewegungsablauf kann auch jeweils in kurzen Abständen, etwa jede Sekunde, anhand der gerade vorliegenden Bedingungen neu berechnet werden.

Durch die fortwährende Neuberechnung kann die Bewegung der Läufer an unvorhergesehene Ereignisse angepasst werden.

In einer weiteren vorteilhaften Ausgestaltung des Verfahrens erfolgt die Ermittlung des Bewegungsablaufs durch zumindest folgende Schritte:
a) Ermittlung einer verfügbaren Anzahl von Läufern, welche für die jeweilige Maschinenstation zur Verfügung stehen,
b) Ermittlung der Aufnahmebereitschaft für eine vorgesehene Anzahl von Läufern der entsprechenden Maschinenstation,
c) falls die verfügbare Anzahl von Läufern zumindest so hoch wie die vorgesehene Anzahl von Läufern ist, erfolgt eine Überführung der vorgesehenen Anzahl der Läufer in den Einflussbereich der entsprechenden Maschinenstation,
d) Ablauf des Bewegungsprofils der Läufer im Einflussbereich der entsprechenden Maschinenstation,
e) nach Ablauf des Bewegungsprofils erfolgt die Überführung der Läufer aus dem Einflussbereich der Maschinenstation heraus.

Mit anderen Worten wird vor der jeweiligen Maschinenstation eine vorgesehene Anzahl von Läufern gesammelt. Falls die vorgesehene Anzahl von Läufern bereitsteht und die Maschinenstation über eine Aufnahmekapazität verfügt, um die vorgesehene Anzahl von Läufern zu übernehmen, erfolgt eine Überführung der Läufer in den Einflussbereich der Maschinenstation hinein. Im Einflussbereich der Maschinenstation wird die Bewegung durch das Bewegungsprofil vorgegeben. Nach Ablauf des Bewegungsprofils werden die Läufer wieder aus dem Einflussbereich der jeweiligen Maschinenstation entlassen. Die entlassenen Läufer stehen dann für eine weitere Maschinenstation bereit.

Durch die vorstehende Ausführung des Verfahrens ist es möglich, dass sich die Anzahl und/oder die Position der Läufer während des Betriebs von dem Linearantrieb ändern können. Eine Maschinenstation zeichnet sich daher im Betrieb lediglich durch eine vorgesehene Anzahl von aufnehmbaren Läufern sowie durch ein zugewiesenes Bewegungsprofil aus.

Nach Durchlauf der Läufer durch eine Maschinenstation kann ein erster Teil der Läufer zu einer weiteren Maschinenstation oder zu einer Mehrzahl von weiteren Maschinenstationen überführt werden.

Zwischen Abgabe der Läufer durch eine Maschinenstation und Aufnahme der Läufer durch eine andere Maschinenstation können die Läufer in einem Zwischenbereich positioniert oder durch den Zwischenbereich bewegt werden. Der Zwischenbereich ist ein Teil des Linearantriebs, der keiner Maschinenstation zugeordnet ist. Mit anderen Worten ist der Zwischenbereich nicht im Einfluss einer Maschinenstation.

Der Zwischenbereich zwischen Einflussbereichen von Maschinenstationen dient zur Speicherung von Läufern, die von einer Maschinenstation abgegeben werden und von einer anderen Maschinenstation aufgenommen werden.

Die Läufer können sich nach einem Schwarmverhalten bewegen. Beispielhaft können sich jeweils zwei Läufer einander beabstandet bewegen oder ausgehend von einer beabstandeten Bewegung nacheinander in eine Beschleunigungsphase/Bremsphase übergehen. Weiter können die Läufer im Zwischenbereich an einer vorgesehenen Stelle positioniert werden. Sobald die entsprechende Maschinenstation aufnahmebereit ist, kann der jeweilige Läufer in den Einflussbereich der entsprechenden Maschinenstation überführt werden.

Durch die vorstehend beschriebene Ausführung des Verfahrens ist es möglich, einzelne Läufer von dem Linearantrieb zu entfernen oder dem Lineartransport zuzufügen, ohne dass der Ablauf des Systems gestört wird.

In einer weiteren vorteilhaften Ausgestaltung wird eine reduzierte Anzahl von Läufern im Schritt c) in den Einflussbereich der Maschinenstation überführt, falls eine vorgegebene Wartezeit abgelaufen ist und wobei im Schritt d) ein modifiziertes Bewegungsprofil von den Läufern durchfahren wird.

Insbesondere bei einer Fehlfunktion einer Maschinenstation und/oder einer Fehlfunktion des Linearantriebs könnte es bis zur Bereitstellung der vorgesehenen Anzahl von Läufern eine längere Zeitdauer verstreichen, ohne dass die vorgesehene Anzahl von Läufern in den Einflussbereich einer Maschinenstation überführt wird. Dies führt nachteilhaft zur Verzögerungen im Bewegungsablauf.

Um eine Verzögerung zu vermeiden, kann das System eine vorgegebene Zeit (z.B. dreißig Sekunden) abwarten, ob die vorgesehene Anzahl von Läufern bereitsteht. Falls nur eine reduzierte Anzahl von Läufern nach Ablauf der Zeit bereitsteht, wird die reduzierte Anzahl von Läufern in den Einflussbereich der entsprechenden Maschinenstation überführt. Die Läufer bewegen sich im Einflussbereich der entsprechenden Maschinenstation gemäß einem modifizierten Bewegungsprofil.

Durch eine solche Ausgestaltung kann eine schnelle Bearbeitung von Werkstücken oder Bearbeitungsgütern sichergestellt werden. Weiter können nachteilhafte Verzögerungen vermieden werden.

In einer weiteren vorteilhaften Ausgestaltung hängt das modifizierte Bewegungsprofil von der reduzierten Anzahl der Läufer ab, die in den Einflussbereich der Maschinenstation überführt werden.

Ein jeweilig modifiziertes Bewegungsprofil wird einer jeweils reduzierten Anzahl von Läufern bereitgestellt. So kann beispielhaft bei einer vorgesehenen Anzahl von sechs Läufern für eine Maschinenstation ein modifiziertes Bewegungsprofil für fünf, vier und drei Läufer bereitgestellt werden.

Beispielhaft steht nach einer Zeitdauer von 30 Sekunden nur eine reduzierte Anzahl von vier Läufern zur Überführung in den Einflussbereich einer Maschinenstation bereit. Dann werden die vier Läufer in den Einflussbereich der Maschinenstation überführt. Die Läufer durchlaufen jeweils ein modifiziertes Bewegungsprofil für die vier Läufer. Anschließend werden die vier Läufer wieder aus dem Einflussbereich der Maschinenstation ausgegeben und weitere Läufer in die Maschinenstation aufgenommen.

Durch eine solche Ausgestaltung kann eine Maschinenstation ohne wesentliche Unterbrechung Läufer in ihren Einflussbereich aufnehmen und somit auf den Läufern befindliche Werkstücke oder Bearbeitungsgüter bearbeiten.

In einer weiteren vorteilhaften Ausgestaltung des Verfahrens ist der Einflussbereich der Maschinenstation durch Segmente, die der jeweiligen Maschinenstation zugeordnet sind, vorgegeben.

Vorteilhaft ist der Einflussbereich der Maschinenstation durch Segmente ausgebildet, welche sich in der Maschinenstation befinden. Im Einflussbereich der Maschinenstation findet vorteilhaft die Bearbeitung der Werkstücke oder der Bearbeitungsgüter statt.

Die Segmente im Einflussbereich der Maschinenstation sind vorteilhaft als (Lang-) Statoren von Linearmotoren ausgebildet.

Im Bereich zwischen den Einflussbereichen sind die Segmente vorteilhaft ebenso als Statoren von Linearmotoren ausgebildet.

Sowohl die Segmente im Einflussbereich der jeweiligen Maschinenstation als auch die Segmente außerhalb des Einflussbereichs der jeweiligen Maschinenstation werden von jeweils einer Steuereinheit oder der Steuereinrichtung gesteuert oder geregelt.

Bei einer Steuerung der Bewegung der Läufer wird hierbei lediglich das Segment mit einer Spannung bzw. mit einem Strom versorgt. Bei einer Regelung der Bewegung der Läufer auf den Segmenten wird vorteilhaft die Position und/oder die Geschwindigkeit der Läufer auf dem jeweiligen Segment ermittelt und die ermittelte Position und/oder die ermittelte Geschwindigkeit dient als Eingangswert für eine Regelungsschleife.

Bei einer weiteren vorteilhaften Ausgestaltung des Verfahrens werden die Läufer außerhalb des Einflussbereiches der jeweiligen Maschinenstation gesammelt.

Die Läufer werden nach Beendigung einer Bearbeitung der Werkstücke oder der Bearbeitungsgüter aus dem Einflussbereich entlassen und/oder auf sonstige Art und Weise für die entsprechende Maschinenstation bereitgestellt. Möglich ist auch eine Bereitstellung auf einem Förderband, welches im Bereich zwischen den Maschinenstationen angeordnet ist.

Vorteilhaft werden außerhalb der Maschinenstation, aber im unmittelbaren Umfeld der Maschinenstation, insbesondere vor der Maschinenstation oder nach der Maschinenstation, die Läufer für die Maschinenstation bereitgestellt. Bei der Aufnahme der Läufer in den Einflussbereich der Maschinenstation werden die Läufer von außerhalb des Bereiches der Maschinenstation in den Einflussbereich der Maschinenstation überführt.

Vorteilhaft erfolgt eine Überführung der Läufer in den Einflussbereich der Maschinenstation von einer Seite des Einflussbereiches der Maschinenstation aus.

Durch eine Sammlung der Läufer außerhalb des Einflussbereiches der jeweiligen Maschinenstation kann vorteilhaft eine einfache Bestimmung der Anzahl der bereitstehenden Läufer für die jeweilige Maschinenstation erfolgen. Dies trägt zu einer schnellen Ermittlung des Bewegungsablaufes bei.

In einer weiteren vorteilhaften Ausgestaltung des Verfahrens ist dem jeweiligen Läufer eine Abfolge von Maschinenstationen zugeordnet, wobei die Abfolge angibt, in welcher Reihenfolge der jeweilige Läufer die Maschinenstationen durchlaufen.

Oft sind Bearbeitungsschritte, welche in den entsprechenden Maschinenstationen ausgeführt werden, in einer bestimmten Reihenfolge ausführbar.

Beispielhaft ist bei einer Abfüllanlage zunächst das Füllmaterial in einer ersten Maschinenstation in das Gefäß einzufüllen und erst dann kann in einer weiteren Maschinenstation das Gefäß verschlossen werden. Daher ist für einen Läufer, welcher zur Beförderung des Gefäßes vorgesehen ist, notwendig, die erste Maschinenstation und dann die weitere(n) Maschinenstation(en) zu durchlaufen. Mit anderen Worten ist es notwendig, dass der Läufer zuerst dem Einflussbereich der ersten Maschinenstation zugeführt wird und dann dem Einflussbereich der zweiten Maschinenstation.

Bei der Steuereinrichtung gemäß Anspruch 12 ist die Steuereinrichtung für einen Linearantrieb ausgebildet, wobei die Steuereinrichtung zur Steuerung und/oder Regelung des Verfahrens nach einem der Ansprüche 1 bis 11 vorgesehen ist.

Die Steuereinrichtung ist vorteilhaft als Bewegungsteuerung oder als speicherprogrammierbare Steuerung (SPS) ausgebildet. Die Steuereinrichtung kann durch weitere Steuereinheiten ergänzt werden. Die Steuereinheiten sind vorteilhaft als Stromrichter oder Strom-/Spannungsverstärker ausgebildet. Die Steuereinheiten sind vorteilhaft untereinander durch eine Datenkommunikation verbunden. Die Steuereinheiten dienen vorteilhaft zur Versorgung der Segmente mit Strom oder Spannung gemäß den Vorgaben der Steuereinheit. Die Steuereinheiten sind weiter vorteilhaft mit einer Regelung wie eine Stromregelung, eine Positionsregelung und/oder einer Geschwindigkeitsregelung ausgestattet.

Der Linearantrieb gemäß Anspruch 13 weist zumindest ein Segment, einen oder mehrere Läufer sowie eine Steuervorrichtung auf. Optional weist der Linearantrieb ein Förderband auf, wobei das Förderband zum Transport der Läufer von einem Segment zu einem anderen Segment vorgesehen ist. Weiter dient die Steuereinrichtung zur Ermittlung des Bewegungsablaufs. Die Steuereinrichtung kann als SPS oder als Bewegungssteuerung ausgebildet sein. Die Steuereinrichtung kann auch durch ein Computerprogrammprodukt, welches auf einer Recheneinheit installiert und ablauffähig ist, ausgebildet sein.

Die Segmente sind vorteilhaft als Statoren für Linearmotoren ausgebildet. Zur Stromversorgung bzw. Spannungsversorgung der Segmente dienen Steuereinheiten, welche insbesondere als Stromrichter ausgebildet sind.

Bei der Anlage gemäß Anspruch 14 handelt es sich insbesondere um eine Werkzeugmaschine, eine Produktionsmaschine oder eine Verpackungsmaschine. Die Anlage weist zumindest eine Maschinenstation und einen vorstehend beschriebenen Linearantrieb auf. Die Anlage dient vorzugsweise zur Bearbeitung von Bearbeitungsgütern oder Werkstücken. Beispielhaft dient die Anlage zur Herstellung und/oder Verpackung von Gütern.

Im Folgenden wird die Erfindung durch Figuren näher beschrieben und erläutert. Die in den Figuren gezeigten Ausführungsformen sowie deren technische Merkmale können durch den Fachmann zu neuen Ausführungsformen der Erfindung kombiniert werden, ohne den Gegenstand der Erfindung zu verlassen. Es zeigen:
- FIG 1: einen Linearantrieb und zwei Maschinenstationen,
- FIG 2: Läufer auf einem Linearantrieb sowie
- FIG 3: einen Linearantrieb und zwei Maschinenstationen.

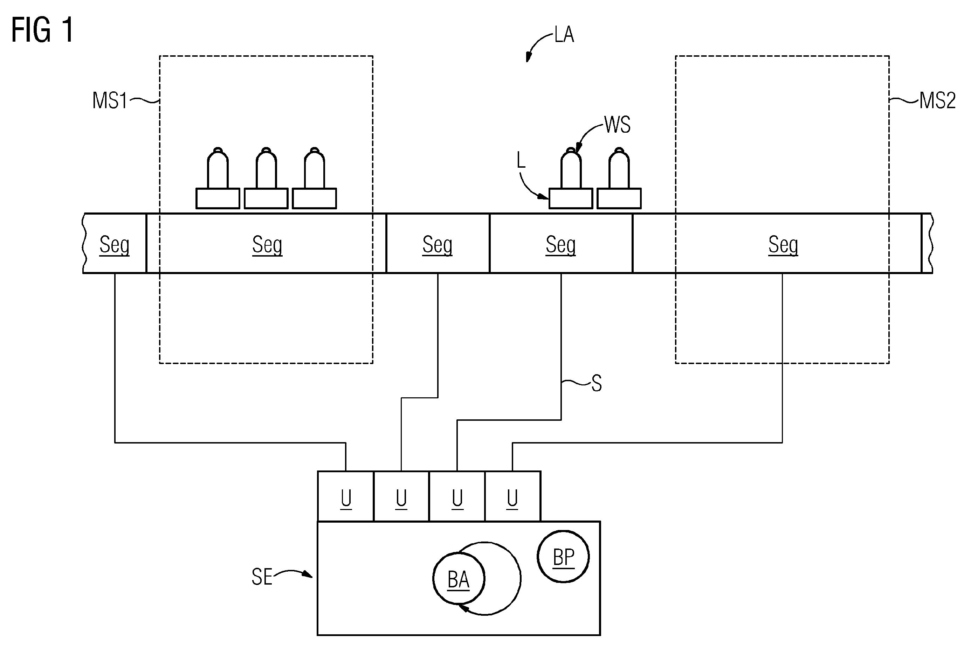

FIG 1 zeigt einen Linearantrieb LA und zwei Maschinenstationen MS1, MS2. Der Linearantrieb LA umfasst eine Steuereinrichtung SE, mehrere Steuereinheiten U, Segmente Seg, und Läufer L. Die Läufer L bewegen sich auf den Segmenten Seg. Die Segmente Seg sind jeweils mit einer Steuereinheit U verbunden. Die Steuereinheiten U sind jeweils mit der Steuereinrichtung SE verbunden. Die Steuereinrichtung SE dient zur Bestimmung des Bewegungsablaufs BA. Vorzugsweise wird der Bewegungsablauf BA während des Betriebes des Linearantriebs LA neu ermittelt bzw. angepasst. Die Anpassung bzw. Neuermittlung ist durch den Pfeil in der Steuereinrichtung SE symbolisiert.

Der Linearantrieb LA dient zum Transport von Läufern L von einer ersten Maschinenstation MS1 zu einer zweiten Maschinenstation MS2. Die Läufer dienen zum Transport von Werkstücken oder Bearbeitungsgütern WS zu der jeweiligen Maschinenstation MS1, MS2. Der Maschinenstation MS1, MS2 ist hier jeweils ein Segment Seg zugeordnet. Das zugeordnete Segment Seg bildet den Einflussbereich EB der jeweiligen Maschinenstation MS1, MS2 ab.

Die Bewegung der Läufer L wird anhand des Bewegungsablaufs BA von der Steuereinrichtung SE gesteuert und/oder geregelt. Hierzu werden Signale S von der Steuereinrichtung SE und/oder der Steuereinheit U zum Segment Seg übertragen.

Vorteilhaft wird die Bewegung innerhalb dem jeweiligen Einflussbereich EB der Maschinenstation MS1, MS2 geregelt und außerhalb der Einflussbereiche gesteuert.

Die Bewegung der Läufer L innerhalb des Einflussbereiches der jeweiligen Maschinenstation MS1, MS2 ist durch ein entsprechendes Bewegungsprofil BP vorgegeben. Das Bewegungsprofil BP kann in der Steuereinrichtung SE vorliegen, insbesondere gespeichert sein.

In der hier gezeigten Ausführung bewegen sich drei Läufer L in der ersten Maschinenstation MS1. Vor der zweiten Maschinenstation MS2 warten zwei weitere Läufer L.

In einem nicht abgebildeten weiteren Bewegungsabschnitt werden die drei Läufer L aus der ersten Maschinenstation MS1 ausgegeben. Danach stehen für die weitere Maschinenstation MS2 fünf Läufer L bereit. Dann können eine, für die zweite Maschinenstation MS2 vorgesehene Anzahl von fünf Läufern L in den Einflussbereich der zweiten Maschinenstation MS2 überführt werden.

Die erste Maschinenstation MS1 ist wieder zur Aufnahme von der für die erste Maschinenstation MS1 vorgesehenen Anzahl N von drei Läufern L frei.

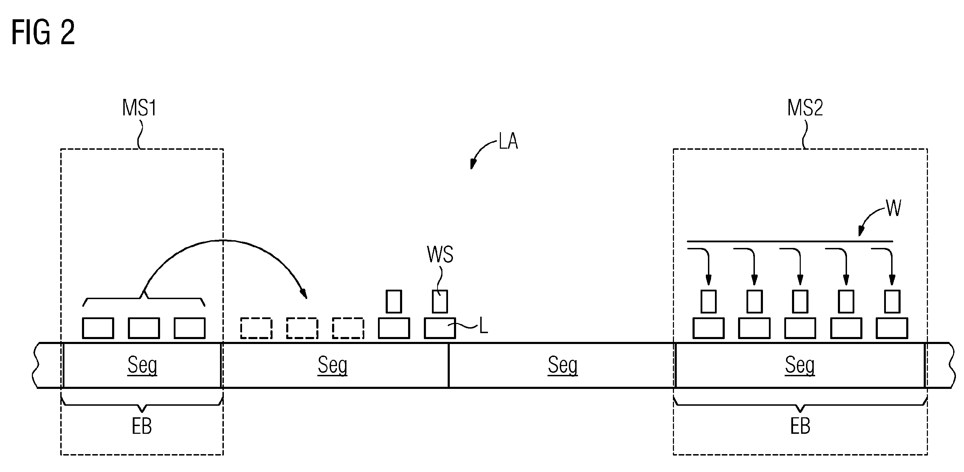

FIG 2 zeigt Läufer L auf einem Linearantrieb LA. Der Linearantrieb LA dient zur Verbindung von einer ersten Maschinenstation MS1 und einer zweiten Maschinenstation MS2. Die Maschinenstationen MS1, MS2 zeichnet sich jeweils durch einen Einflussbereich EB aus, wobei die Segmente Seg, die der jeweiligen Maschinenstation MS1, MS2 zugeordnet sind, den Einflussbereich EB der jeweiligen Maschinenstation MS1, MS2 ausbilden. Im Einflussbereich EB der Maschinenstationen MS1, MS2 ist die Bewegung der Läufer L vorzugsweise geregelt. Die Regelung erfolgt mit Hilfe der Steuereinrichtung SE und/oder der entsprechenden Steuereinheit U.

Die Maschinenstationen MS1, MS2 sind derart ausgebildet, dass sie eine Mehrzahl von Werkstücken/Bearbeitungsgütern WS auf einer Mehrzahl von Läufern L in einem Arbeitsschritt bearbeiten. Nach der Bearbeitung der Werkstücke WS werden die Läufer L aus dem Einflussbereich der Maschinenstation MS1 herausgeführt. In der zweiten Maschinenstation MS2 dient ein Werkzeug W zur Bearbeitung einer Mehrzahl von Werkstücken WS.

Nach Ausgabe der drei Läufer L aus der ersten Maschinenstation MS1 stehen im Bereich zwischen der ersten Maschinenstation MS1 und der zweiten Maschinenstation MS2 die vorgesehene Anzahl von fünf Läufern L bereit, in die den Einflussbereich der zweiten Maschinenstation MS2 überführt werden können.

Diese fünf Läufer L werden dann in den Einflussbereich EB der zweiten Maschinenstation MS2 überführt, sobald die anderen fünf Läufer L, die sich bereits im Einflussbereich EB der zweiten Maschinenstation MS2 befinden, denselben verlassen haben.

Die Bewegungen der jeweiligen Läufer L im Einflussbereich EB der jeweiligen Maschinenstation MS1, MS2 werden durch die entsprechenden Bewegungsprofile BP bestimmt. Das Bewegungsprofil BP der jeweiligen Maschinenstation MS1, MS2 kann sich an dem Bewegungen der Bearbeitungsmittel, insbesondere der Werkzeuge W, orientieren.

Anstelle der Segmente Seg zwischen den jeweiligen Einflussbereichen EB der Maschinenstationen MS1, MS2 können auch ein Förderband oder mehrere Förderbänder den Transport der Läufer L übernehmen.

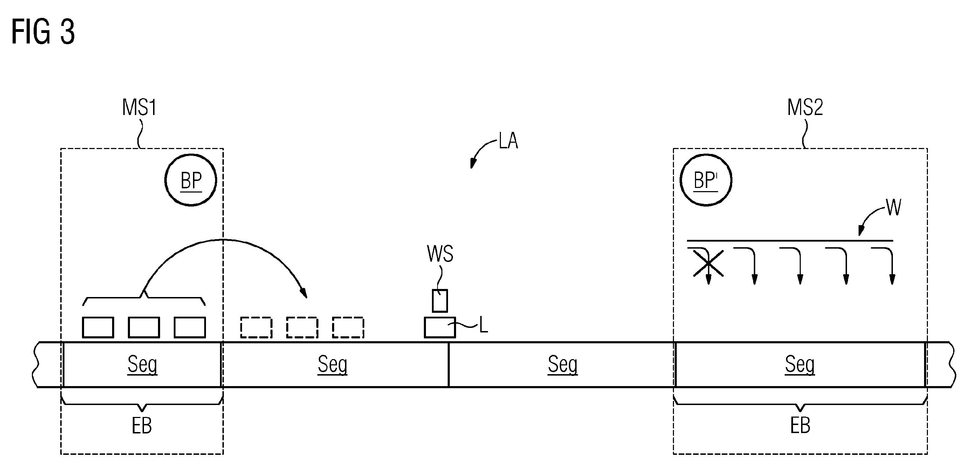

FIG 3 zeigt ebenfalls einen Linearantrieb LA und zwei Maschinenstationen MS1, MS2. Die Ausgestaltung entspricht im Wesentlichen der Ausgestaltung, wie sie in FIG 2 gezeigt ist. Jedoch befinden sich nach Ausgabe der drei Läufer L aus der ersten Maschinenstation MS1 lediglich eine reduzierte Anzahl von vier Läufern L zwischen den Einflussbereichen EB der Maschinenstationen MS1, MS2. Damit steht nur einer reduzierte Anzahl von vier Läufern L für für die zweite Maschinenstation MS2 bereit. Um die Produktion trotz der reduzierten Anzahl von (vier anstelle der vorgesehenen fünf) Läufern L nicht anzuhalten, wird die reduzierten Anzahl von vier Läufer L im Einflussbereich EB der Maschinenstation MS2 überführt. Die vier Läufer L werden im Einflussbereich EB der zweiten Maschinenstation MS2 gemäß einem modifizierten Bewegungsprofil BP' bewegt.

Hierzu können auch die Funktionsweise und/oder die Bewegung der Bearbeitungsmittel W beeinflusst sein, wie durch den durchgestrichenen ersten gebogenen Pfeil gekennzeichnet.

Zusammenfassend betrifft die Erfindung ein Verfahren zur Steuerung und/oder Regelung eines Linearantriebs LA, einen Linearantrieb LA und eine Anlage. Der Linearantrieb LA weist zumindest ein Segment Seg, zumindest einen Läufer L, zumindest eine Maschinenstation MS1, MS2 und eine Steuereinrichtung SE auf,
- wobei der zumindest eine Läufer L mit Hilfe des zumindest einen Segments Seg in einer Richtung x bewegt wird,
- wobei zumindest ein Teil zumindest eines Segments Seg in einem Einflussbereich EB der Maschinenstation MS1, MS2 ist,
- wobei die Bewegung des zumindest einen Läufers L durch die Steuereinrichtung SE und/oder eine Steuereinheit U gesteuert und/oder geregelt wird,
- wobei die Steuerung anhand eines Bewegungsablaufs BA für den Läufer L erfolgt,
- wobei die Bewegung des jeweiligen Läufers L im Einflussbereich EB der jeweiligen Maschinenstation MS1, MS2 von einem Bewegungsprofil BP gemäß der Funktionsweise der jeweiligen Maschinenstation MS1, MS2 vorgegeben wird.

## Patentansprüche

1. Verfahren zur Steuerung und/oder Regelung eines Linearantriebs (LA), aufweisend zumindest ein Segment (Seg), zumindest einen Läufer (L), zumindest eine Maschinenstation (MS1, MS2) und eine Steuereinrichtung (SE),
- wobei der zumindest eine Läufer (L) mit Hilfe des zumindest einen Segments (Seg) in einer Richtung (x) bewegt wird,
- wobei zumindest ein Teil zumindest eines Segments (Seg) in einem Einflussbereich (EB) der Maschinenstation (MS1, MS2) ist,
- wobei die Bewegung des zumindest einen Läufers (L) durch die Steuereinrichtung (SE) und/oder eine Steuereinheit (U) gesteuert und/oder geregelt wird,
- wobei die Steuerung anhand eines Bewegungsablaufs (BA) für den Läufer (L) erfolgt,
- wobei die Bewegung des jeweiligen Läufers (L) im Einflussbereich (EB) der jeweiligen Maschinenstation (MS1, MS2) von einem Bewegungsprofil (BP) gemäß der Funktionsweise der jeweiligen Maschinenstation (MS1, MS2) vorgegeben wird.

2. Verfahren nach Anspruch 1, wobei das jeweilige Bewegungsprofil (PB) von der Steuereinrichtung (SE) oder von der entsprechenden Maschinenstation (MS1, MS2) vorgegeben wird.

3. Verfahren nach Anspruch 1 oder 2, wobei eine Mehrzahl von Läufern (L) gemeinsam in den Einflussbereich (EB) der jeweiligen Maschinenstation überführt wird.

4. Verfahren nach einem der vorangehenden Ansprüche, wobei die Bewegung des jeweiligen Läufers (L) durch die Steuereinrichtung (SE) vorgegeben wird.

5. Verfahren nach einem der vorangehenden Ansprüche, wobei die Bewegung des jeweiligen Läufers (L) während des Betriebs des Linearantriebs (LA) ermittelt wird.

6. Verfahren nach einem der vorangehenden Ansprüche, wobei die Ermittlung des Bewegungsablaufs (BA) durch die Steuereinrichtung (SE) erfolgt, wobei der Bewegungsablauf (BA) durch zumindest folgende Schritte erfolgt:
a) Ermittlung einer verfügbaren Anzahl von Läufern (L), welche für die jeweilige Maschinenstation (MS1, MS2) zur Verfügung stehen,
b) Ermittlung der Aufnahmebereitschaft für eine vorgesehene Anzahl (N) von Läufern (L) der entsprechenden Maschinenstation (MS1, MS2),
c) falls die verfügbare Anzahl von Läufern (L) zumindest so hoch wie die vorgesehene Anzahl von Läufern (L) ist, erfolgt eine Überführung der vorgesehenen Anzahl (N) der Läufer (L) in den Einflussbereich (EB) der entsprechenden Maschinenstation (MS1, MS2),
d) Ablauf des Bewegungsprofils (BP) der Läufer (L) im Einflussbereich der entsprechenden Maschinenstation (MS1, MS2),
e) nach Ablauf des Bewegungsprofils (BP) erfolgt die Überführung der Läufer aus dem Einflussbereich (EB) der Maschinenstation (MS1, MS2) heraus.

7. Verfahren nach Anspruch 6, wobei eine reduzierte Anzahl (M) von Läufern (L) im Schritt c) in den Einflussbereich (EB) der Maschinenstation (MS1, MS2) überführt wird, falls eine vorgegebene Wartezeit abgelaufen ist und wobei im Schritt d) ein modifiziertes Bewegungsprofil (BP) von den Läufern durchfahren wird.

8. Verfahren nach einem der Ansprüche 6 und 7, wobei das modifizierte Bewegungsprofil von der reduzierten Anzahl (M) der Läufer (L) abhängt, die in den Einflussbereich der Maschinenstation (MS1, MS2) überführt werden.

9. Verfahren nach einem der vorangehenden Ansprüche, wobei der Einflussbereich (EB) der Maschinenstation (MS1, MS2) durch Segmente (Seg), die der jeweiligen Maschinenstation (MS1, MS2) zugeordnet sind, vorgegeben ist.

10. Verfahren nach einem der vorangehenden Ansprüche, wobei die Läufer (L) außerhalb des Einflussbereiches (EB) der jeweiligen Maschinenstation (MS1, MS2) gesammelt werden.

11. Verfahren nach einem der vorangehenden Ansprüche, wobei dem jeweiligen Läufern (L) eine Abfolge von Maschinenstationen ,(MS1, MS2) zugeordnet ist, wobei die Abfolge angibt, in welcher Reihenfolge der jeweilige Läufer (L) die Maschinenstationen (MS1, MS2) durchlaufen.

12. Steuereinrichtung (SE) für einen Linearantrieb (LA), wobei die Steuereinrichtung (SE) zur Steuerung und/oder Regelung des Verfahrens nach einem der Ansprüche 1 bis 11 vorgesehen ist.

13. Linearantrieb, aufweisend zumindest ein Segment (Seg), einen oder mehrere Läufer (LA) sowie eine Steuervorrichtung (SE) nach Anspruch 12.

14. Anlage, insbesondere Werkzeugmaschine, Produktionsmaschine oder Verpackungsmaschine, aufweisend eine Maschinenstation (MS1, MS2) und einen Linearantrieb (LA) nach Anspruch 13.
